# EUROPEAN PATENT APPLICATION

(11) **EP 4 495 277 A1**
(43) Date of publication of application: **22.01.2025**
(21) Application number: 23770501.7
(22) Date of filing: 06.03.2023
(51) Int. Cl.: C22B 1/00, C22B 7/00, C22B 26/12, C22B 3/06, C22B 3/26, C22B 3/44, C25B 1/16

(54) **METHOD FOR PROCESSING LITHIUM ION SECONDARY BATTERY**

(30) Priority: 15.03.2022 JP 2022040824
(71) Applicant: Mitsubishi Materials Corporation, Tokyo 100-8117 (JP)
(72) Inventor: KAWASAKI, Hajime, Iwaki-shi, Fukushima 971-8101 (JP); HAYASHI, Hiroshi, Tokyo 100-8117 (JP); SATOU, Ryousuke, Iwaki-shi, Fukushima 971-8101 (JP)
(74) Representative: Gille Hrabal Partnerschaftsgesellschaft mbB Patentanwälte
(86) International application number: PCT/JP2023/008294
(87) International publication number: WO 2023/176545

(57) **Abstract**

A method for processing a lithium ion secondary battery includes: a crushing and sorting step (S02) of crushing and classifying a lithium ion secondary battery to obtain an electrode material containing at least lithium; a leaching step (S03) of immersing the electrode material in an acid to obtain a leachate; a pH adjustment step (S04) of adding lithium hydroxide to the leachate to adjust a pH; a metal recovery step (S05) of recovering a metal other than lithium in the leachate to obtain a lithium-containing liquid; and a lithium hydroxide recovery step (S06) of recovering lithium in the lithium-containing liquid as lithium hydroxide, in which the lithium hydroxide recovered in the lithium hydroxide recovery step (S06) is used in the pH adjustment step (S04).

## Description

### TECHNICAL FIELD

The present invention relates to a method for processing a lithium ion secondary battery.

Priority is claimed on Japanese Patent Application No. 2022-040824, filed March 15, 2022, the content of which is incorporated herein by reference.

### BACKGROUND ART

Valuable metals such as lithium, copper, aluminum, cobalt, nickel, manganese, or iron are used in lithium ion secondary batteries. Therefore, valuable metals are recovered from discarded lithium ion secondary batteries and the recovered metals are reused.

As a method for recovering a valuable metal from a lithium ion secondary battery, a method of immersing electrodes of the lithium ion secondary battery in an acid to obtain a leachate and recovering a metal in the obtained leachate is known. As a method for recovering the metal in the leachate, a method of adjusting a pH of the leachate to precipitate metal ions in the leachate and then separating the precipitated metal through solid-liquid separation, or a solvent extraction method is used. As a pH adjuster for adjusting the pH of the leachate, an alkali such as sodium hydroxide, sodium carbonate, or ammonia is used

(Patent Document 1). As a method for recovering lithium ions from a leachate containing sodium ions caused by a pH adjuster or the like of the leachate and lithium ions, a method of scrubbing a solvent containing lithium ions and sodium ions with a lithium solution and then reverse-extracting lithium ions has been examined (Patent Document 2).

### CITATION LIST

### Patent Documents

[Patent Document 1]
   Japanese Unexamined Patent Application, First Publication No. 2018-40035
[Patent Document 2]
   Japanese Unexamined Patent Application, First Publication No. 2020-164969

### SUMMARY OF INVENTION

### Technical Problem

Sodium hydroxide and sodium carbonate are useful as a pH adjuster for a leachate because sodium hydroxide and sodium carbonate are odorless and easy to handle. However, in order to recover lithium at a high purity, as described in Patent Document 2, an operation for separating sodium is required, which reduces efficiency.

This invention has been made in view of the above-described circumstances, and an object of the invention is to provide a method for processing a lithium ion secondary battery, with which lithium contained in a lithium ion secondary battery can be efficiently recovered at a high purity.

### Solution to Problem

In order to solve the above-described problems, a method for processing a lithium ion secondary battery according to an aspect of the present invention includes: a crushing and sorting step of crushing and classifying a lithium ion secondary battery to obtain an electrode material containing at least lithium; a leaching step of immersing the electrode material in an acid to obtain a leachate; a pH adjustment step of adding lithium hydroxide to the leachate to adjust a pH; a metal recovery step of recovering a metal other than lithium in the leachate to obtain a lithium-containing liquid; and a lithium hydroxide recovery step of recovering lithium in the lithium-containing liquid as lithium hydroxide, in which the lithium hydroxide recovered in the lithium hydroxide recovery step is used in the pH adjustment step.

According to the method for processing a lithium ion secondary battery according to the aspect of the present invention, since lithium hydroxide is used as a pH adjuster (alkali) in the pH adjustment step, the lithium-containing liquid obtained in the metal recovery step does not substantially contain sodium. Therefore, in the lithium hydroxide recovery step, when lithium in the lithium-containing liquid is recovered as lithium hydroxide, a step of removing sodium is not necessary, and lithium can be easily recovered, thereby improving work efficiency. In addition, since the step of removing sodium is not necessary, wastewater discharged together with sodium is not generated, resulting in a reduction in load on wastewater treatment. Furthermore, since lithium hydroxide recovered in the lithium hydroxide recovery step is used as the pH adjuster (alkali) in the pH adjustment step, there is less need to prepare an alkali separately, which further improves the work efficiency and reduces chemical solution costs. In the metal recovery step, it is not necessary to recover all metals other than lithium, and it is sufficient to reduce the amounts of other metals to a level that does not significantly affect the recovery of lithium or the like in the lithium hydroxide recovery step.

Here, in the method for processing a lithium ion secondary battery according to the aspect of the present invention, in the lithium hydroxide recovery step, the lithium-containing liquid may be separated into a solution containing lithium hydroxide and a solution containing an acid to be recovered by using an electrodialysis method, and the acid recovered in the lithium hydroxide recovery step may be used in the leaching step.

In this case, the acid recovered in the lithium hydroxide recovery step is used in the leaching step, so that the work efficiency is further increased and the chemical solution costs are further reduced. In addition, by recovering the acid in the lithium-containing liquid in the lithium hydroxide recovery step, the amount of wastewater discharged together with the acid is reduced, so that the load on the wastewater treatment is further reduced.

In addition, in the method for processing a lithium ion secondary battery according to the aspect of the present invention, the acid may be sulfuric acid.

In this case, since sulfuric acid is used as the acid, nickel or cobalt contained in the electrode material can be recovered as a sulfate. Since a sulfate such as nickel sulfate or cobalt sulfate is used as the battery electrode material, recycling of nickel or cobalt is facilitated by recovering nickel or cobalt as the sulfate.

### ADVANTAGEOUS EFFECTS OF INVENTION

According to the above-described aspect of the present invention, it is possible to provide a method for processing a lithium ion secondary battery, with which lithium contained in a lithium ion secondary battery can be efficiently recovered at a high purity.

### BRIEF DESCRIPTION OF DRAWINGS

FIG. 1 is a flowchart showing a method for processing a lithium ion secondary battery according to an embodiment of the present invention.
FIG. 2 is a block diagram showing an example of a lithium recovery apparatus that can be used in the method for processing a lithium ion secondary battery according to the embodiment of the present invention.
FIG. 3 is a schematic sectional view showing another example of an electrodialysis device that can be used in the lithium recovery apparatus shown in FIG. 2.
FIG. 4 is a schematic sectional view showing still another example of the electrodialysis device that can be used in the lithium recovery apparatus shown in FIG. 2.
FIG. 5 is a schematic sectional view showing yet another example of the electrodialysis device that can be used in the lithium recovery apparatus shown in FIG. 2.

### DESCRIPTION OF EMBODIMENTS

Hereinafter, a method for processing a lithium ion secondary battery of an embodiment of the present invention will be described with reference to the drawings. Each embodiment described below is specifically described for better understanding of the gist of the invention, and does not limit the present invention unless otherwise specified.

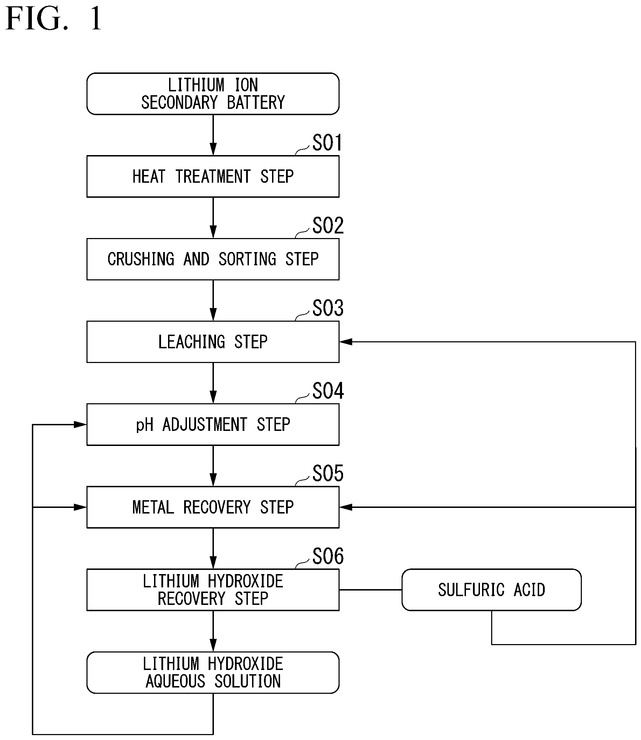

FIG. 1 is a flowchart showing a method for processing a lithium ion secondary battery according to the embodiment of the present invention.

As shown in FIG. 1, the method for processing a lithium ion secondary battery of the present embodiment includes a heat treatment step S01, a crushing and sorting step S02, a leaching step S03, a pH adjustment step S04, a metal recovery step S05, and a lithium hydroxide recovery step S06.

### (Heat Treatment Step S01)

In the heat treatment step S01, a discarded lithium ion secondary battery (hereinafter, referred to as a waste LIB) is subjected to a heat treatment. A heat treatment temperature is, for example, in a range of 400°C or higher and 660°C or lower. The heat treatment may be vacuum heating or atmospheric pressure heating. The waste LIB has high adhesion between a positive electrode active material and a negative electrode active material, and a current collector, which is an aluminum foil or a copper foil. Therefore, by performing the heat treatment step, it is easy to separate the active materials from the current collector. In addition, by performing the heat treatment step, a flammable substance such as an organic solvent contained in a separator and an electrolytic liquid of the lithium secondary battery can be thermally decomposed and removed.

### (Crushing and Sorting Step S02)

In the crushing and sorting step S02, the waste LIB subjected to the heat treatment in the heat treatment step S01 is crushed and classified to obtain an electrode material containing lithium. The crushing of the waste LIB can be performed using a shear-type crusher such as a twin-shaft crusher or an impact-type crusher such as a hammer mill alone or in combination of two or more kinds thereof. The classification of the crushed waste LIB can be performed using, for example, a sieve. By using the sieve, coarse crushed materials including a battery exterior material, a metal tab terminal, a positive electrode current collector, and a negative electrode current collector can be recovered as an oversize product of the sieve, and the electrode material can be recovered as an undersize product of the sieve. The electrode material primarily contains the positive electrode active material and the negative electrode active material, but also contains a small amount of residues of the electrolytic liquid and fine powder of the coarse crushed materials that have been over-crushed.

### (Leaching Step S03)

In the leaching step S03, the electrode material (black mass) obtained in the crushing and sorting step S02 is immersed in an acid to obtain a leachate. As the acid, for example, a mineral acid such as sulfuric acid, hydrochloric acid, and nitric acid can be used. In the present embodiment, sulfuric acid is used as the acid. In the present embodiment, the electrode material and sulfuric acid are mixed, and the obtained mixture is stirred for 1 to 3 hours while adjusting a temperature to 50°C to 80°C to dissolve metals in the electrode material and obtain a leachate. In addition, metal leaching can also be promoted by introducing hydrogen peroxide or dissolved oxygen during the leaching.

A pH of the leachate is not particularly limited, and is, for example, 2 or less. The metals contained in the leachate vary depending on the materials used in the waste LIB, and examples of the metals include lithium, cobalt, nickel, manganese, iron, aluminum, and copper. Lithium is contained in, for example, the positive electrode active material, the negative electrode active material, and the residues of the electrolytic liquid of the waste LIB. Cobalt, nickel, and manganese are contained in, for example, the positive electrode active material of the waste LIB. Aluminum is contained in, for example, the positive electrode current collector of the waste LIB. Copper is contained in, for example, the negative electrode current collector of the waste LIB. Iron is contained in, for example, the battery exterior material of the waste LIB.

In a case where the leachate contains insoluble matter, it is preferable to remove the insoluble matter. As a method for removing the insoluble matter, a solid-liquid separation method such as decantation, pressure filtration, and centrifugation can be used. The insoluble matter is, for example, a carbon material. The carbon material is contained in, for example, the positive electrode active material and the negative electrode active material of the waste LIB.

### (pH Adjustment Step S04)

In the pH adjustment step S04, lithium hydroxide is added to the leachate obtained in the leaching step S03 to adjust the pH. The pH of the leachate is adjusted, for example, by adding lithium hydroxide to the leachate while stirring the leachate. The pH of the leachate is adjusted to, for example, a range of 3.0 or more and 6.0 or less, and preferably a range of 4.0 or more and 5.0 or less. As a result, aluminum in the leachate is precipitated as aluminum hydroxide, and iron is precipitated as iron hydroxide.

### (Metal Recovery Step S05)

In the metal recovery step S05, metals other than lithium in the leachate are recovered to obtain a lithium-containing liquid (lithium sulfate-containing liquid). First, precipitates (aluminum hydroxide and iron hydroxide) precipitated in the pH adjustment step S04 are recovered. As a method for recovering the precipitates, a solid-liquid separation method such as decantation, pressure filtration, and centrifugation can be used.

Next, cobalt, nickel, manganese, and copper in the leachate are recovered. These metals can be selectively recovered by a solvent extraction method. A method for recovering the above metals by solvent extraction is not particularly limited, and a known method can be used. For example, manganese and copper may be recovered first, cobalt may be subsequently recovered, and then nickel may be recovered. In a case of recovering the above metals by solvent extraction, lithium hydroxide (alkali) and sulfuric acid (acid) can be used to adjust the pH of the leachate.

The recovery of manganese and copper by the solvent extraction method can be performed by stirring and mixing the leachate and the extraction solvent, extracting manganese and copper from the leachate into the extraction solvent, subjecting the leachate and the extraction solvent to phase separation by settling to be separated from each other, and then separating the extraction solvent. Manganese and copper in the extraction solvent can be recovered by washing the extraction solvent, then stirring and mixing the extraction solvent with a sulfuric acid aqueous solution, and reverse-extract manganese and copper from the extraction solvent into the sulfuric acid aqueous solution. As the extraction solvent, a mixed solvent containing a phosphate ester-based extractant and an oxime-based extractant can be used. By using this mixed solvent, iron and aluminum remaining in the leachate can be simultaneously recovered.

The recovery of cobalt by the solvent extraction method can be performed by stirring and mixing the leachate and the extraction solvent, extracting cobalt from the leachate into the extraction solvent, subjecting the leachate and the extraction solvent to phase separation by settling to be separated from each other, and then separating the extraction solvent. Cobalt in the extraction solvent can be recovered by washing the extraction solvent, then stirring and mixing the extraction solvent with a sulfuric acid aqueous solution, and reverse-extract cobalt from the extraction solvent into the sulfuric acid aqueous solution. As the extraction solvent, for example, a phosphate ester-based extractant such as PC-88A can be used. In a case where cobalt is recovered from a leachate containing cobalt and nickel using PC-88A, a pH of the leachate is adjusted to, for example, a range of 2 to 5 to extract cobalt and a portion of nickel, and then nickel is washed and removed from the extraction solvent using a dilute acid.

The recovery of nickel by the solvent extraction method can be performed by stirring and mixing the leachate and the extraction solvent, extracting nickel from the leachate into the extraction solvent, subjecting the leachate and the extraction solvent to phase separation by settling to be separated from each other, and then separating the extraction solvent. Nickel in the extraction solvent can be recovered by washing the extraction solvent, then stirring and mixing the extraction solvent with a sulfuric acid aqueous solution, and reverse-extract nickel from the extraction solvent into the sulfuric acid aqueous solution. As the extraction solvent, for example, a phosphate ester-based extractant such as PC-88A can be used. In a case where nickel is recovered using PC-88A, a pH of the leachate is adjusted to, for example, a range of 4 to 7. In a case where the leachate contains cobalt, the method of recovering cobalt by solvent extraction described above is performed, and the leachate after the cobalt extraction is subjected to solvent extraction to recover nickel.

### (Lithium Hydroxide Recovery Step S06)

In the lithium hydroxide recovery step S06, lithium in the lithium-containing liquid (lithium sulfate-containing liquid) obtained in the metal recovery step S05 is recovered as lithium hydroxide, and sulfuric acid is recovered. The recovered lithium hydroxide is used as a pH adjuster (alkali) in the pH adjustment step S04 and the metal recovery step S05. In addition, the recovered sulfuric acid is used as the acid in the leaching step S03 and as a pH adjuster (acid) in the metal recovery step S05. As a method for recovering lithium in the lithium sulfate-containing liquid as lithium hydroxide and recovering sulfuric acid, an electrodialysis method can be used.

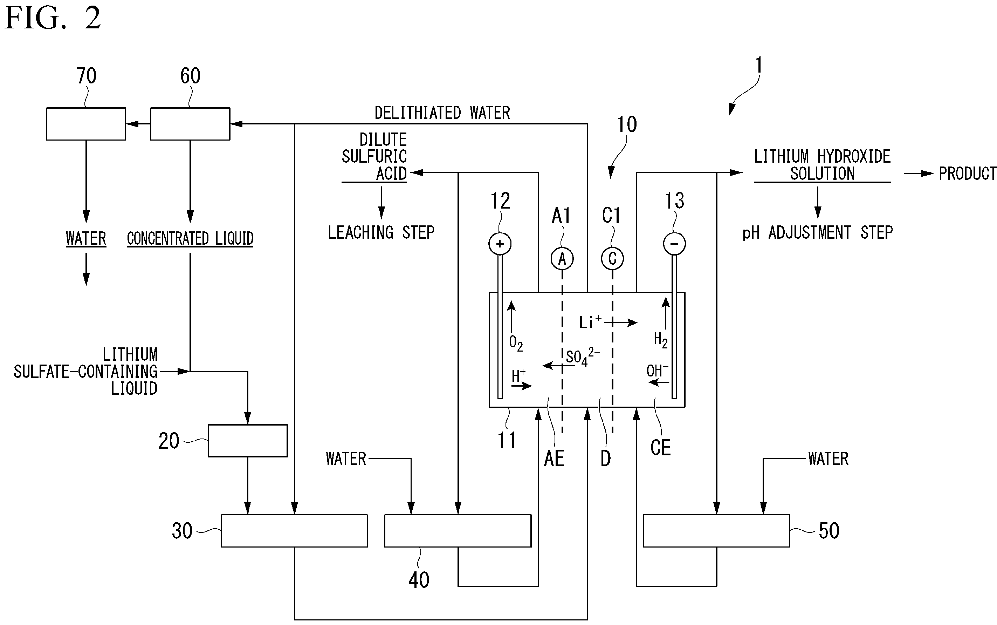

FIG. 2 is a block diagram showing an example of a lithium recovery apparatus that can be used in the method for processing a lithium ion secondary battery according to the embodiment of the present invention.

As shown in FIG. 2, a lithium recovery apparatus 1 includes an electrodialysis device 10. The lithium recovery apparatus 1 further includes a purification device 20, a lithium sulfate circulation tank 30, a sulfuric acid circulation tank 40, a lithium hydroxide circulation tank 50, an evaporator 60, and a condenser 70.

The electrodialysis device 10 includes a container 11, an anode 12 and a cathode 13 disposed in the container 11, and an anion exchange membrane A1 and a cation exchange membrane C1 disposed between the anode 12 and the cathode 13. The anion exchange membrane A1 is disposed on an anode 12 side, and the cation exchange membrane C1 is disposed on a cathode 13 side. The anode 12 and the anion exchange membrane A1 form an anode chamber AE, the anion exchange membrane A1 and the cation exchange membrane C1 form a desalination chamber D, and the cathode 13 and the cation exchange membrane C1 form a cathode chamber CE. The lithium sulfate-containing liquid is supplied to the desalination chamber D. When a voltage is applied between the anode 12 and the cathode 13, lithium ions (Li⁺) in the desalination chamber D move to the cathode chamber CE through the cation exchange membrane C1, and sulfate ions (SO₄²⁻) move to the anode chamber AE through the anion exchange membrane A1. Hydrogen ions (H⁺) are generated at the anode 12, and a sulfuric acid concentrated liquid is produced in the anode chamber AE. Hydroxide ions (OH-) are generated at the cathode 13, and a lithium hydroxide concentrated liquid is produced in the cathode chamber CE.

The delithiated water from which lithium has been desalinated in the desalination chamber D is sent to the evaporator 60 or the lithium sulfate circulation tank 30. In the evaporator 60, the delithiated water is heated and concentrated by evaporation of water. The obtained concentrated liquid is sent to a purification device 20 together with the lithium sulfate-containing liquid. On the other hand, the evaporated water (water vapor) is sent to the condenser 70 and liquefied.

The purification device 20 removes, by an ion exchange method or a solvent extraction method, cations other than lithium ions and anions other than sulfate ions, which are contained in a lithium sulfate-containing mixed liquid obtained by mixing the lithium sulfate-containing liquid and the concentrated liquid. As a method for removing cations by the ion exchange method, for example, a method of bringing a cation exchange resin substituted with lithium or a chelate resin forming a chelate with lithium into contact with the lithium sulfate-containing mixed liquid can be used. In addition, as a method for removing anions by the ion exchange method, for example, a method of bringing an anion exchange resin substituted with sulfuric acid or a chelate resin forming a chelate with lithium into contact with the lithium sulfate-containing mixed liquid can be used. The lithium sulfate-containing mixed liquid purified by the purification device 20 is sent to the lithium sulfate circulation tank 30.

The lithium sulfate-containing mixed liquid sent to the lithium sulfate circulation tank 30 is temporarily stored in the lithium sulfate circulation tank 30 and then sent to the desalination chamber D of the electrodialysis device 10. A lithium sulfate concentration of the lithium sulfate-containing mixed liquid is preferably in a range of 1 mass% or more and 20 mass% or less. In a case where a concentration of the lithium sulfate-containing mixed liquid sent from the purification device 20 is high, the lithium sulfate-containing mixed liquid is diluted with the delithiated water. When the lithium sulfate concentration of the lithium sulfate-containing mixed liquid is less than 1 mass%, there is concern that a voltage during electrolysis increases and it becomes difficult to achieve an appropriate operation, whereas when the lithium sulfate concentration is more than 20 mass%, there is concern that the concentration is near a solubility of lithium sulfate, and it becomes difficult to handle the lithium sulfate-containing mixed liquid.

A portion of the sulfuric acid concentrated liquid (dilute sulfuric acid) produced in the anode chamber AE is taken out and used as the acid in the leaching step or as the pH adjuster (acid) in the metal recovery step. The remaining sulfuric acid concentrated liquid is sent to the sulfuric acid circulation tank 40. Water is further supplied to the sulfuric acid circulation tank 40. As the water, water liquefied in the condenser 70 can be used.

The sulfuric acid concentrated liquid and water sent to the sulfuric acid circulation tank 40 are mixed in the sulfuric acid circulation tank 40, are temporarily stored as a sulfuric acid diluted liquid, and are then sent to the anode chamber AE of the electrodialysis device 10. A sulfuric acid concentration of the sulfuric acid diluted liquid is preferably 1 mass% or more. When the sulfuric acid concentration of the sulfuric acid diluted liquid is less than 1 mass%, there is concern that the voltage during the electrolysis increases, and it becomes difficult to achieve an appropriate operation.

A portion of the lithium hydroxide concentrated liquid produced in the cathode chamber CE is taken out and used as the pH adjuster (alkali) in the pH adjustment step or the metal recovery step. In addition, a portion of the taken lithium hydroxide concentrated liquid is used as lithium hydroxide (product). The remaining lithium hydroxide concentrated liquid is sent to the lithium hydroxide circulation tank 50. Water is further supplied to the lithium hydroxide circulation tank 50. As the water, water liquefied in the condenser 70 can be used.

The lithium hydroxide concentrated liquid and water sent to the lithium hydroxide circulation tank 50 are mixed in the lithium hydroxide circulation tank 50, are temporarily stored as a lithium hydroxide diluted liquid, and are then sent to the cathode chamber CE of the electrodialysis device 10. A lithium hydroxide concentration of the lithium hydroxide diluted liquid is preferably in a range of 1 mass% or more and 10 mass% or less. When the lithium hydroxide concentration of the lithium hydroxide diluted liquid is less than 1 mass%, there is concern that the voltage during the electrolysis increases and it becomes difficult to achieve an appropriate operation, whereas when the lithium hydroxide concentration of the lithium hydroxide diluted liquid is more than 20 mass%, there is concern that it becomes difficult for lithium ions to move from the desalination chamber D to the cathode chamber CE.

Operating conditions of the electrodialysis device 10 also vary depending on conditions such as a size of the device and the lithium sulfate concentration of the lithium sulfate-containing mixed liquid. For example, an applied voltage between the anode 12 and the cathode 13 is in a range of 1 V or more and 3 V or less, and a current density is in a range of 0.3 mA/dm² or more and 50 mA/dm² or less, and preferably in a range of 1 mA/dm² or more and 20 mA/dm² or less. A liquid temperature of the lithium sulfate-containing mixed liquid, the sulfuric acid diluted liquid, and the lithium hydroxide diluted liquid in the electrodialysis device 10 is, for example, 100°C or lower, and preferably 30°C or higher and 60°C or lower. In addition, it is preferable that concentrations and flow rates of the lithium sulfate-containing mixed liquid, the sulfuric acid diluted liquid, and the lithium hydroxide diluted liquid are adjusted so that a production rate of lithium hydroxide is in a range of 140 g/m² (effective area of the ion exchange membrane)/hour or more and 900 g/m² (effective area of the ion exchange membrane)/hour or less. The effective area of the ion exchange membrane is an area of a portion where the anion exchange membrane and the cation exchange membrane face each other.

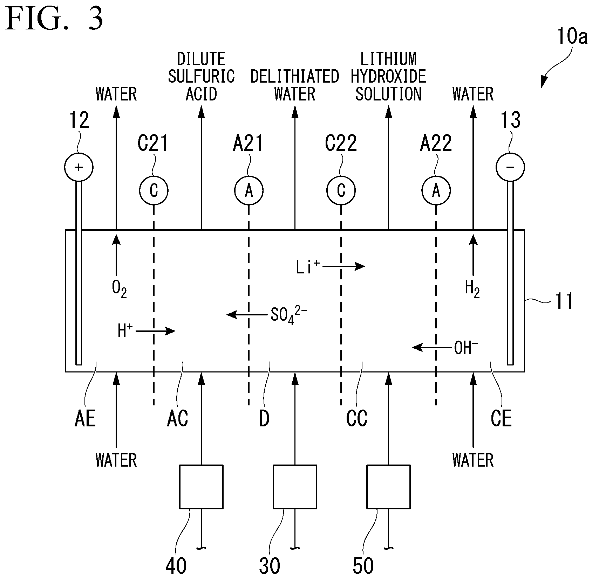

In the lithium recovery apparatus 1 shown in FIG. 2, the electrodialysis device 10 has a configuration in which one anion exchange membrane A1 and one cation exchange membrane C1 are disposed between the anode 12 and the cathode 13, but the configuration of the electrodialysis device 10 is not limited thereto. For example, a configuration may be adopted in which a plurality of anion exchange membranes and cation exchange membranes are alternately disposed, or a configuration may be adopted in which a plurality of anion exchange membranes, cation exchange membranes, and bipolar membranes are disposed in this order. Examples of the electrodialysis device 10 are shown in FIGS. 3 to 5.

In an electrodialysis device 10a shown in FIG. 3, cation exchange membranes C21 and C22 and anion exchange membranes A21 and A22 are alternately disposed between the anode 12 and the cathode 13. The cation exchange membrane C21 is disposed at an end on the anode 12 side, and the anion exchange membrane A22 is disposed at an end on the cathode 13 side. The anode 12 and the cation exchange membrane C21 form the anode chamber AE, the cation exchange membrane C21 and the anion exchange membrane A21 form a sulfuric acid concentration chamber AC, the anion exchange membrane A21 and the cation exchange membrane C22 form the desalination chamber D, the cation exchange membrane C22 and the anion exchange membrane A22 form a lithium concentration chamber CC, and the anion exchange membrane A22 and the cathode 13 form the cathode chamber CE. Water is supplied to the anode chamber AE and the cathode chamber CE. The desalination chamber D is connected to the lithium sulfate circulation tank 30 and is supplied with the lithium sulfate-containing mixed liquid. The sulfuric acid concentration chamber AC is connected to the sulfuric acid circulation tank 40 and is supplied with the sulfuric acid diluted liquid. The lithium concentration chamber CC is connected to the lithium hydroxide circulation tank 50 and is supplied with the lithium hydroxide diluted liquid.

When a voltage is applied between the anode 12 and the cathode 13 of the electrodialysis device 10a, lithium ions in the desalination chamber D move to the lithium concentration chamber CC through the cation exchange membrane C22, and sulfate ions move to the sulfuric acid concentration chamber AC through the anion exchange membrane A21. Hydrogen ions in the anode chamber AE move to the sulfuric acid concentration chamber AC through the cation exchange membrane C21. Hydroxide ions in the cathode chamber CE move to the lithium concentration chamber CC through the anion exchange membrane A22. Accordingly, a sulfuric acid concentrated liquid is produced in the sulfuric acid concentration chamber AC. In addition, a lithium hydroxide concentrated liquid is produced in the lithium concentration chamber CC.

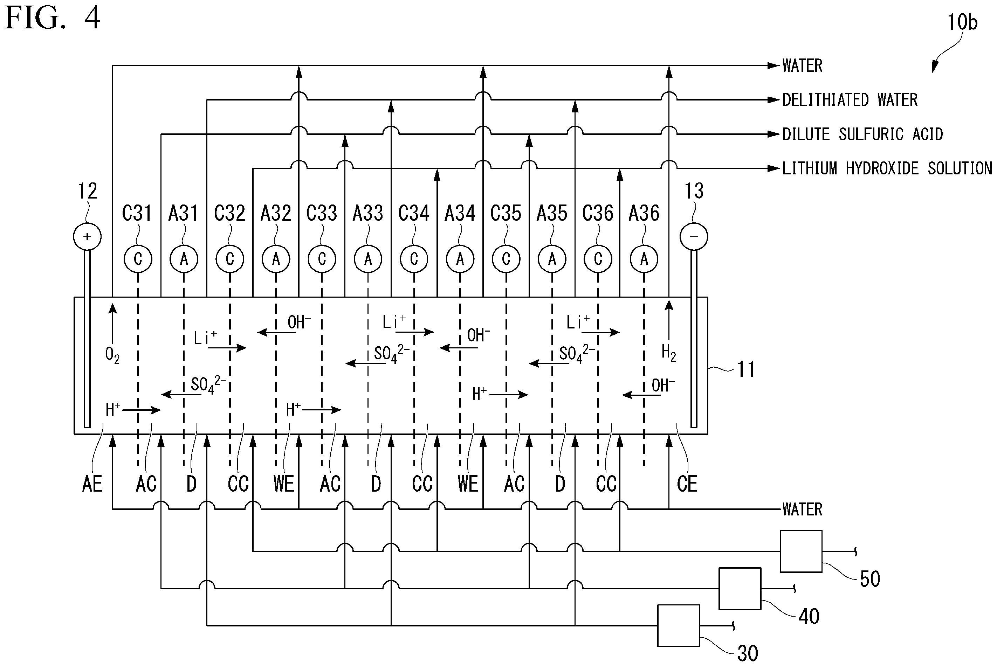

In an electrodialysis device 10b shown in FIG. 4, cation exchange membranes C31 to C36 and anion exchange membranes A31 to A36 are alternately disposed between the anode 12 and the cathode 13. The cation exchange membrane C31 is disposed at an end of the anode 12, and the anion exchange membrane A36 is disposed at the end on the cathode 13 side. The anode 12 and the cation exchange membrane C31 form the anode chamber AE. The sulfuric acid concentration chamber AC is formed between the cation exchange membrane C31 and the anion exchange membrane A31, between the cation exchange membrane C33 and the anion exchange membrane A33, and between the cation exchange membrane C35 and the anion exchange membrane A35. The desalination chamber D is formed between the anion exchange membrane A31 and the cation exchange membrane C32, between the anion exchange membrane A33 and the cation exchange membrane C34, and between the anion exchange membrane A35 and the cation exchange membrane C36. The lithium concentration chamber CC is formed between the cation exchange membrane C32 and the anion exchange membrane A32, between the cation exchange membrane C34 and the anion exchange membrane A34, and between the cation exchange membrane C36 and the anion exchange membrane A36. A water electrolysis chamber WE is formed between the anion exchange membrane A32 and the cation exchange membrane C33 and between the anion exchange membrane A34 and the cation exchange membrane C35. The anion exchange membrane A36 and the cathode 13 form the cathode chamber CE. Water is supplied to the anode chamber AE, the cathode chamber CE, and the water electrolysis chamber WE. The desalination chamber D is connected to the lithium sulfate circulation tank 30 and is supplied with the lithium sulfate-containing mixed liquid. The sulfuric acid concentration chamber AC is connected to the sulfuric acid circulation tank 40 and is supplied with the sulfuric acid diluted liquid. The lithium concentration chamber CC is connected to the lithium hydroxide circulation tank 50 and is supplied with the lithium hydroxide diluted liquid.

When a voltage is applied between the anode 12 and the cathode 13 of the electrodialysis device 10b, lithium ions in the desalination chamber D move to the lithium concentration chamber CC through the cation exchange membranes C32, C34, and C36, and sulfate ions move to the sulfuric acid concentration chamber AC through the anion exchange membranes A31, A33, and A35. Hydrogen ions in the anode chamber AE move to the sulfuric acid concentration chamber AC through the cation exchange membrane C31. Hydroxide ions in the cathode chamber CE move to the lithium concentration chamber CC through the anion exchange membrane A36. Hydrogen ions in the water electrolysis chamber WE move to the sulfuric acid concentration chamber AC through the cation exchange membranes C33 and C35, and hydroxide ions move to the lithium concentration chamber CC through the anion exchange membranes A32 and A34. Accordingly, a sulfuric acid concentrated liquid is produced in the sulfuric acid concentration chamber AC. In addition, a lithium hydroxide concentrated liquid is produced in the lithium concentration chamber CC.

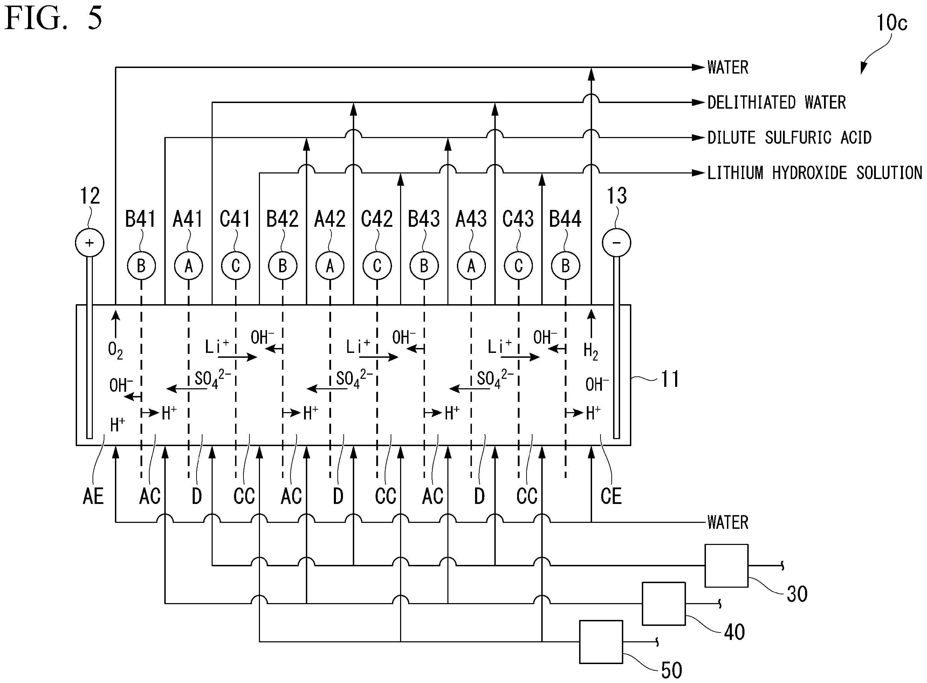

In an electrodialysis device 10c shown in FIG. 5, bipolar membranes B41 to B43, cation exchange membranes C41 to C43, and anion exchange membranes A41 to A43 are arranged between the anode 12 and the cathode 13 in the order of a bipolar membrane, a cation exchange membrane, and an anion exchange membrane from the anode 12. The bipolar membrane B44 is disposed between the anion exchange membrane A43 at the end on the cathode 13 side and the cathode 13. The anode 12 and the bipolar membrane B41 form the anode chamber AE. The sulfuric acid concentration chamber AC is formed between the bipolar membrane B41 and the anion exchange membrane A31, between the bipolar membrane B42 and the anion exchange membrane A42, and between the bipolar membrane B43 and the anion exchange membrane A43. The desalination chamber D is formed between the anion exchange membrane A41 and the cation exchange membrane C41, between the anion exchange membrane A42 and the cation exchange membrane C42, and between the anion exchange membrane A43 and the cation exchange membrane C43. The lithium concentration chamber CC is formed between the cation exchange membrane C41 and the bipolar membrane B42, between the cation exchange membrane C42 and the bipolar membrane B43, and between the cation exchange membrane C43 and the bipolar membrane B44. The bipolar membrane B44 and the cathode 13 form the cathode chamber CE. Water is supplied to the anode chamber AE and the cathode chamber CE. The desalination chamber D is connected to the lithium sulfate circulation tank 30 and is supplied with the lithium sulfate-containing mixed liquid. The sulfuric acid concentration chamber AC is connected to the sulfuric acid circulation tank 40 and is supplied with the sulfuric acid diluted liquid. The lithium concentration chamber CC is connected to the lithium hydroxide circulation tank 50 and is supplied with the lithium hydroxide diluted liquid.

When a voltage is applied between the anode 12 and the cathode 13 of the electrodialysis device 10c, lithium ions in the desalination chamber D move to the lithium concentration chamber CC through the cation exchange membranes C41 to C43, and sulfate ions move to the sulfuric acid concentration chamber AC through the anion exchange membranes A41 to A43. Hydrogen ions produced at the bipolar membranes B41 to B43 move to the sulfuric acid concentration chamber AC, and hydroxide ions produced at the bipolar membranes B42 to B44 move to the lithium concentration chamber CC. Accordingly, a sulfuric acid concentrated liquid is produced in the sulfuric acid concentration chamber AC. In addition, a lithium hydroxide concentrated liquid is produced in the lithium concentration chamber CC.

All of the above-described electrodialysis devices 10a to 10c can be advantageously used as the electrodialysis device of the lithium recovery apparatus 1.

According to the method for processing a lithium ion secondary battery of the present embodiment configured as described above, since lithium hydroxide is used as the pH adjuster (alkali) in the pH adjustment step S04, the lithium-containing liquid obtained in the metal recovery step S05 does not substantially contain sodium. Therefore, in the lithium hydroxide recovery step, when lithium in the lithium-containing liquid is recovered as lithium hydroxide, a step of removing sodium is not necessary, and lithium can be easily recovered, thereby improving work efficiency. In addition, since the step of removing sodium is not necessary, wastewater discharged together with sodium is not generated, resulting in a reduction in load on wastewater treatment. Furthermore, since lithium hydroxide recovered in the lithium hydroxide recovery step S06 is used as the pH adjuster (alkali) in the pH adjustment step S04, there is less need to prepare an alkali separately, which further improves the work efficiency and reduces chemical solution costs. In the metal recovery step S05, it is not necessary to recover all metals other than lithium, and it is sufficient to reduce the amounts of other metals to a level that does not significantly affect the recovery of lithium or sulfuric acid in the lithium hydroxide recovery step S06.

In addition, in the method for processing a lithium ion secondary battery of the present embodiment, in the lithium hydroxide recovery step S06, the lithium-containing liquid is separated into a solution containing lithium hydroxide and a solution containing sulfuric acid to be recovered by using an electrodialysis method, and sulfuric acid recovered in the lithium hydroxide recovery step S06 is used in the leaching step S03, which further increases the work efficiency and further reduces the chemical solution costs. In addition, by recovering sulfuric acid in the lithium sulfate-containing liquid in the lithium hydroxide recovery step S06, the amount of wastewater discharged together with sulfuric acid is reduced, and the load on the wastewater treatment is further reduced.

In addition, in the method for processing a lithium ion secondary battery of the present embodiment, since sulfuric acid is used as the acid, nickel or cobalt contained in the electrode material can be recovered as a sulfate. Since a sulfate such as nickel sulfate or cobalt sulfate is used as the battery electrode material, recycling of nickel or cobalt is facilitated by recovering nickel or cobalt as the sulfate.

Although the embodiments of the present invention have been described above, the embodiments are presented as examples and thus are not intended to limit the scope of the invention. These embodiments can be implemented in various other forms, and various omissions, substitutions, and changes can be made without departing from the gist of the invention. These embodiments and modifications thereof are included within the scope of the inventions described in the claims and their equivalents, as well as within the scope and gist of the invention.

For example, in the method for processing a lithium ion secondary battery of the present embodiment, the heat treatment step S01 is performed before the crushing and sorting step S02, but the heat treatment step S01 may be omitted. However, in this case, the separator may be mixed in the electrode material obtained in the crushing and sorting step 502. In a case where the separator is mixed in the electrode material, it is preferable to remove the separator after the electrode material is used as the leachate in the leaching step S03.

In addition, in the method for processing a lithium ion secondary battery of the present embodiment, sulfuric acid is used in the leaching step S03, but hydrochloric acid or nitric acid may be used instead of the sulfuric acid. In a case where hydrochloric acid is used, in the lithium hydroxide recovery step S06, chloride ions are recovered instead of sulfate ions. In a case where nitric acid is used, in the lithium hydroxide recovery step S06, nitrate ions are recovered instead of sulfate ions.

In addition, in the method for processing a lithium ion secondary battery of the present embodiment, the electrodialysis method is used as the method for recovering lithium in the lithium hydroxide recovery step S06, but the method for recovering lithium is not limited thereto. As the method for recovering lithium, a method of recovering lithium as lithium carbonate and preparing a lithium hydroxide solution using the obtained lithium carbonate may be used. As the method for recovering lithium as lithium carbonate, a method of removing impurities from a lithium-containing liquid to purify the lithium-containing liquid, adding a carbonate such as sodium carbonate or sodium bicarbonate or carbon dioxide to the lithium-containing liquid to precipitate lithium carbonate, and recovering the precipitated lithium carbonate can be used. In this case, a pH can be adjusted by adding sodium hydroxide to promote the formation of lithium carbonate. As a method for purifying the lithium-containing liquid, an ion exchange method or a solvent extraction method can be used. As a method for precipitating lithium carbonate, in a case where the lithium-containing liquid is a lithium sulfate-containing liquid, for example, a method of causing a reaction between lithium sulfate and sodium carbonate (Li₂SO₄ + Na₂CO₃ → Li₂CO₃↓ + Na₂SO₄) can be used. As a method for recovering the precipitated lithium carbonate, a solid-liquid separation method such as decantation, pressure filtration, and centrifugation can be used.

As a method for preparing the lithium hydroxide solution using lithium carbonate, for example, the following method can be used. First, water and lithium carbonate are mixed to obtain a lithium carbonate solution. Next, calcium hydroxide (slaked lime) is added to the lithium carbonate solution to cause a reaction between lithium carbonate and calcium hydroxide (Li₂CO₃ + Ca(OH)₂ → 2LiOH + CaCO₃↓) to produce lithium hydroxide and to precipitate calcium carbonate. Then, calcium carbonate is removed from the lithium hydroxide solution by the solid-liquid separation method.

### INDUSTRIAL APPLICABILITY

According to the present invention, it is possible to provide a method for processing a lithium ion secondary battery, with which lithium contained in a lithium ion secondary battery can be efficiently recovered at a high purity.

### REFERENCE SIGNS LIST

1: Lithium recovery apparatus
10, 10a, 10b, 10c: Electrodialysis device
11: Container
12: Anode
13: Cathode
20: Purification device
30: Lithium sulfate circulation tank
40: Sulfuric acid circulation tank
50: Lithium hydroxide circulation tank
60: Evaporator
70: Condenser

## Claims

1. A method for processing a lithium ion secondary battery, the method comprising:
a crushing and sorting step of crushing and classifying a lithium ion secondary battery to obtain an electrode material containing at least lithium;
a leaching step of immersing the electrode material in an acid to obtain a leachate;
a pH adjustment step of adding lithium hydroxide to the leachate to adjust a pH;
a metal recovery step of recovering a metal other than lithium in the leachate to obtain a lithium-containing liquid; and
a lithium hydroxide recovery step of recovering lithium in the lithium-containing liquid as lithium hydroxide,
wherein the lithium hydroxide recovered in the lithium hydroxide recovery step is used in the pH adjustment step.

2. The method for processing a lithium ion secondary battery according to Claim 1,
wherein, in the lithium hydroxide recovery step, the lithium-containing liquid is separated into a solution containing lithium hydroxide and a solution containing an acid by using an electrodialysis method, and the acid recovered in the lithium hydroxide recovery step is used in the leaching step.

3. The method for processing a lithium ion secondary battery according to Claim 1 or 2, wherein the acid is sulfuric acid.
